# EUROPEAN PATENT APPLICATION

(11) **EP 4 599 657 A1**
(43) Date of publication of application: **13.08.2025**
(21) Application number: 24219639.2
(22) Date of filing: 13.12.2024
(51) Int. Cl.: A01C 7/08, A01C 7/20, A01C 21/00

(54) **PLANTER FLEXION IDENTIFICATION**

(30) Priority: 08.02.2024 US 202418436386
(71) Applicant: Deere & Company, Moline, IL 61265 (US)
(72) Inventor: Sherlock, Lance R., Mannheim (DE); Kilworth, Timothy J., Mannheim (DE)
(74) Representative: Holst, Sönke

(57) **Abstract**

An agricultural system including a work implement (12) for fertilizing or planting seed in a field. The work implement (12) includes a toolbar (14) having a first terminating end (72) and a second terminating end (74), wherein the toolbar (14) includes a plurality of row units (28). A first sensor (70A) is operatively connected to the first end (72) and a second sensor (70B) is operatively connected to the second end (74). The toolbar (14) defines a longitudinal axis (58), wherein the first sensor (70A) identifies a first deflection of the first end (70A) with respect to the longitudinal axis (58) and the second sensor (70B) identifies a second deflection of the second end (74) with respect to the longitudinal axis (58). A user interface (80) is operatively connected to the first sensor (70A) and to the second sensor (70B), wherein the user interface (80) identifies one or both of the first deflection and the second deflection.

## Description

The present disclosure relates to an agricultural implement, and in particular, to an agricultural implement having a planter or seeder.

### BACKGROUND

An agricultural fertilizer spreader implement or agricultural seed planter implement deposits fertilizer in rows or seed in rows as the implement is pulled by a work vehicle, such as a tractor, through an agricultural field for planting. Combination fertilizer spreaders/planter deposit fertilizer in rows followed by planting seeds along the same row that have received the fertilizer. In these types of agricultural implements, the fertilizer spreader precedes a row crop planter such that the ground is fertilized prior to the seeds being deposited.

These agricultural implements typically each include a plurality of row units coupled one or more bars supported by tires. A combination of one bar and its row units is also known as a rank. Some agricultural implements include a single bar and other agricultural implements include two or more bars. The bar or bars are inclined with and extend substantially perpendicular to the direction of travel of the work vehicle when pulled through the agricultural field. In the case where fertilizing and/or seeding occurs, a plurality of row units are aligned side by side along one of the bars. In other implementations, multiple bars are located in parallel with one bar following the other to form a multi-rank implement.

In one implementation, a single bar agricultural implement includes eleven row units on either side of a central location of the implement. The row units are spaced equally apart along the bar. In an agricultural implement configured to either only fertilize or to both fertilize and deposit seeds, the fertilizer row units and seeding row units of the apparatus are aligned and deposit product substantially parallel to the travel direction of the tractor when being pulled through a field.

Each of the row units include soil engaging components that can include components that open a furrow, place a fertilizer or seed in the furrow, and cover the furrow. Since each of the row units includes components that contact the soil, each row unit as it moves through the soil generates a drag force on the row unit. This drag force, in turn, is transferred to the bar that is coupled to the row unit. The transferred drag force can, under some conditions, generate undesirable forces that flex the bar from its generally perpendicular location with respect to the work machine travel direction. This misalignment may affect the placement of seeds or fertilizer from their intended location.

### SUMMARY

In one implementation there is provided a work implement for fertilizing or planting seed in a field. The work implement includes a toolbar having a first end and a second end, wherein the toolbar includes a plurality of row units. A first sensor is operatively connected to the first end and a second sensor is operatively connected to the second end. The toolbar defines a longitudinal axis, wherein the first sensor identifies a first deflection of the first end with respect to the longitudinal axis and the second sensor identifies a second deflection of the second end with respect to the longitudinal axis. A user interface is operatively connected to the first sensor and the second sensor, wherein the user interface identifies one or both of the first deflection and the second deflection.

In some implementations there is provided a work implement wherein the toolbar includes a first toolbar having the first end and a first plurality of row units and a second toolbar having the second end and a second plurality of row units, wherein the second toolbar is operatively connected to the first toolbar. The user interface identifies a first location of the first sensor and a second location of the second sensor.

In some implementations there is provided a work implement further including a first movable joint located at a first jointed end of the first toolbar and a second movable joint located at a second jointed end of the second toolbar, wherein the first location is at the first end of the first toolbar and the second location is at the second end of the second toolbar.

In some implementations there is provided a work implement wherein the first sensor or the second sensor includes one of an inertial measurement unit (IMU) sensor, a strain gauge, or a pin rotation sensor.

In some implementations there is provided a work implement wherein at least one of the first sensor, the second sensor, or the third sensor include a GNSS sensor.

In some implementations there is provided a work implement further including a center frame section including a center toolbar having a third plurality of row units, wherein the center toolbar is operatively connected to the first movable joint and to the second movable joint, wherein the first sensor is located at the first toolbar, the second sensor is located at the second toolbar, and the third sensor is located at a fixed position with respect to the center toolbar.

In some implementations there is are provided a work implement further including a center frame section having a center toolbar with a third plurality of row units, wherein the center toolbar is operatively connected to the first movable joint and to the second movable joint and the third sensor is located at the center toolbar.

In some implementations there is provided a work implement wherein the third sensor is fixed with respect to the center frame section and with respect to the longitudinal axis and the first sensor moves from the longitudinal axis with the first deflection of the first toolbar and the second sensor moves from the longitudinal axis with the second deflection of the second toolbar.

In some implementations there is provided a work implement of including a controller operatively connected to the first sensor, the second sensor, and the third sensor, wherein the controller compares a first location signal provided by the first sensor with a third location signal provided by the third sensor to identify the first deflection and compares a second location signal provided by the second sensor with the third location signal to identify the second deflection of the second toolbar.

In some implementations there is provided a work implement wherein each of the first GNSS sensor, the second GNSS sensor, and the third GNSS sensor respectively transmit the first location signal, the second location signal, and the third location signal to a cloud system operatively connected to the controller.

In another implementation there is provided an agricultural system for fertilizing or planting seed in a field. The agricultural system includes a power mover including a propulsion system and a work implement operatively connected to the power mover. The propulsion system moves the work implement through the field in a forward direction to fertilize or plant the seed in the field. The work implement includes a toolbar defining a longitudinal axis and having a plurality of row units, wherein the toolbar includes a first sensor operatively connected to a first end of the toolbar and a second sensor operatively connected to a second end of the toolbar. The first sensor identifies a first deflection of the first end with respect to the longitudinal axis and the second sensor identifies a second deflection of the second end with respect to the longitudinal axis. A user interface is operatively connected to the first sensor and the second sensor, wherein the user interface identifies one or both of the first deflection and the second deflection.

In some implementations there is provided an agricultural system wherein the toolbar includes a first toolbar and a second toolbar. The first toolbar includes the first end and the first toolbar includes a first rotatable coupling configured to enable the first toolbar to fold with respect to the power mover. A second toolbar includes the second end, wherein the second toolbar includes a second rotatable coupling configured to enable the second toolbar to fold with respect to the power mover. The interface identifies a first location of the first sensor and a second location of the second sensor.

In some implementations there is provided an agricultural system wherein the first sensor or the second sensor includes one of an inertial measurement unit (IMU) sensor, a strain gauge, or a pin rotation sensor.

In some implementations there is provided an agricultural system wherein the first sensor and the second sensor includes a GNSS sensor.

In some implementations there is provided an agricultural system wherein the work implement includes a center frame section including a center toolbar having a third plurality of row units. The center toolbar is operatively connected to the first rotatable coupling and to the second rotatable coupling and a third sensor is located at a fixed position with respect to the center toolbar.

In some implementations there is provided an agricultural system wherein the third sensor is located at a fixed position with respect to the longitudinal axis and the first sensor moves from the longitudinal axis with deflection of the first toolbar and the second sensor moves from the longitudinal axis with deflection of the second toolbar.

In some implementations there is provided an agricultural system further comprising a controller operatively connected to the first sensor, the second sensor, and the third sensor. The controller compares a first location signal provided by the first sensor with a third location signal provided by the third sensor to identify the first deflection and compares a second location signal provided by the second sensor with the third location signal to identify the second deflection of the second toolbar.

In some implementations there is provided an agricultural system wherein each of the first GNSS sensor, the second GNSS sensor, and the third GNSS sensor respectively transmit the first location signal, the second location signal, and the third location signal to a cloud system operatively connected to the controller.

In a further implementation there is provided a method of identifying a deflection of a toolbar of a work implement having a plurality of row units. The method includes: identifying a first location of a first end of the toolbar when deflected from a longitudinal axis of the toolbar; identifying a second location of a second end of the toolbar when deflected from the longitudinal axis of the toolbar; comparing the identified first location with respect to a first threshold to identify an amount of a first deflection; comparing the identified second location with respect to a second threshold to identify an amount of a second deflection; and displaying one or both of the amount of the first deflection of the amount of the second deflection on a user interface.

In some implementations there is provided a method wherein the toolbar includes a first toolbar rotatably coupled to a center toolbar with a first rotatable coupler and includes a second toolbar rotatably coupled to the second toolbar with a second rotatable coupler, wherein the first deflection identifies wear at the first rotatable coupler and the second deflection identifies wear at the second rotatable coupler.

In some implementations there is provided a method further including moving the work vehicle along a straight line path when comparing the first location of the first end of the toolbar and when comparing the second location of the second end of the toolbar.

### BRIEF DESCRIPTION OF THE DRAWINGS

The above-mentioned aspects of the present disclosure and the manner of obtaining them will become more apparent and the disclosure itself will be better understood by reference to the following description of the implementations of the disclosure, taken in conjunction with the accompanying drawings.
FIG. 1 is a top view of an agricultural system including a farm implement pulled by a work vehicle.
FIG. 2 is a schematic top view of an agricultural system including a single row farm implement pulled by a work vehicle illustrating forces applied to the farm implement when being pulled through a field.
FIG. 3 is a perspective view of a movable joint for coupling a movable bar to a fixed bar of a farm implement.
FIG. 4 is a perspective view of a movable bar aligned with a fixed bar of a farm implement.
FIG. 5 is a monitoring system for identifying flex in one or more bars of a farm implement.
FIG. 6 is a monitoring system for identifying flex in one or more bars of a farm implement using one or more global navigation satellite system (GNSS) sensors.

Corresponding reference numerals are used to indicate corresponding parts throughout the several views.

### DETAILED DESCRIPTION

The implementations of the present disclosure described below are not intended to be exhaustive or to limit the disclosure to the precise forms in the following detailed description. Rather, the implementations are chosen and described so that others skilled in the art may appreciate and understand the principles and practices of the present disclosure.

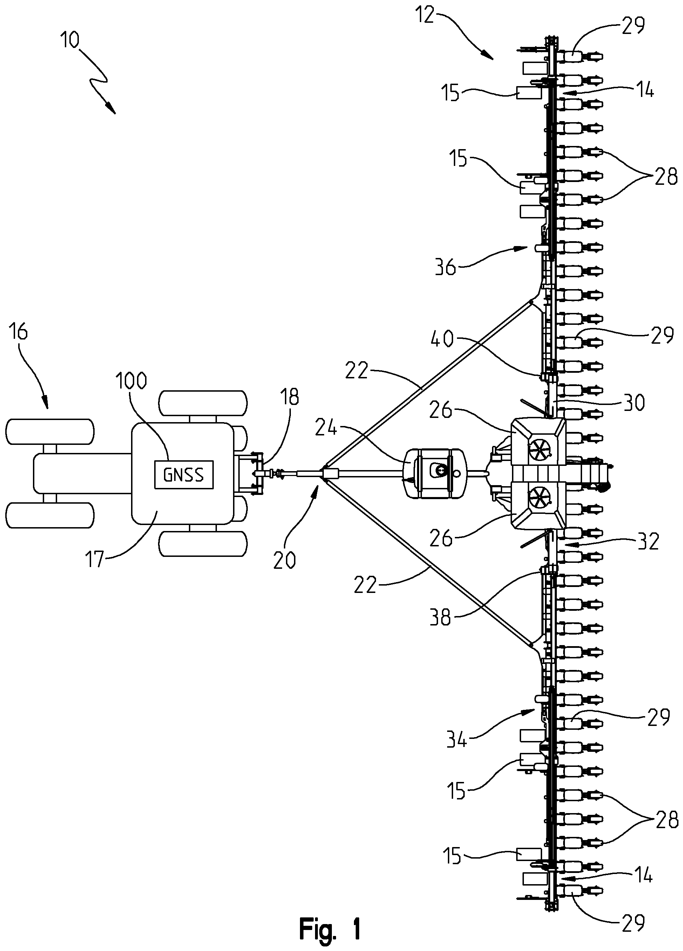

Referring to the drawings, and more particularly to FIG. 1, there is shown an implementation of an agricultural system 10 including an agricultural tool or implement 12. In the implementation shown, the agricultural tool 12 is a planter, but in other implementations, the agricultural tool 12 is a fertilizer spreader or a seeder. The tool 12 includes a toolbar 14 supported by wheels 15. A work vehicle 16, in the form of a tractor, includes a hitch 18 that may be coupled to and move the implement 12 with a suitable coupling arrangement, i.e. towing assembly 20. The towing assembly 20 includes drawbars 22 coupled to the hitch 18 and coupled to the toolbar 14. implementations are contemplated including an autonomous machine including a propulsion system having a power mover, such as an engine, pulling the implement 12, as well as an entirely self-contained autonomous fertilizer/seeder implement, including the row units and a propulsion system, are a complete and unitary seeding system. The implement 12 includes a liquid fertilizer tank 24 and seed hoppers 26.

In the case of a seeder, the frame / toolbar on a seeder can have up to five (5) sections and may use a separate commodity cart. If a commodity cart is used, the commodity cart may be used as mounting location for the GNSS sensor, in addition to mounting the GNSS sensor on the tractor, on the center toolbar, or on a separate connected implement.

The toolbar 14 includes a number of row units 28. In some implementation, each of the row units 28 include a seed hopper 29. In other implementations, the row units 28 do not include a seed hopper, but receive seed from a centrally located and larger seed hopper or tank, such as seed hopper 26. A center toolbar 30, which is fixedly coupled to a center frame section 32, supports the row units 28. A first toolbar 34 extends from the center toolbar 30 in a first direction and a second toolbar 36 extends from the center toolbar 32 in a second direction. During a planting operation, the center toolbar 30, the first toolbar 34, and the second toolbar 36 are aligned along the same longitudinally extending axis extending from one end of the toolbar 14 to another end of the toolbar 14.

The first toolbar 34 is rotatably coupled to the center toolbar 30 at a first rotatable coupler 38 and the second toolbar 36 is rotatably coupled to center toolbar 30 by a second rotatable coupler 40. Each of the first toolbar 34 and the second toolbar 36 rotate about respective first rotatable coupler 38 and second rotatable coupler 40 for folding toward the work vehicle 16. Once folded, the implement 12 may be transported along a road due to the collapsed nature of the implement 12, as would be understood by one skilled in the art. In other implementations, each of the first toolbar 34 and the second toolbar 36 includes an inner wing and an outer wing, which are also foldable with respect to one another for transportation.

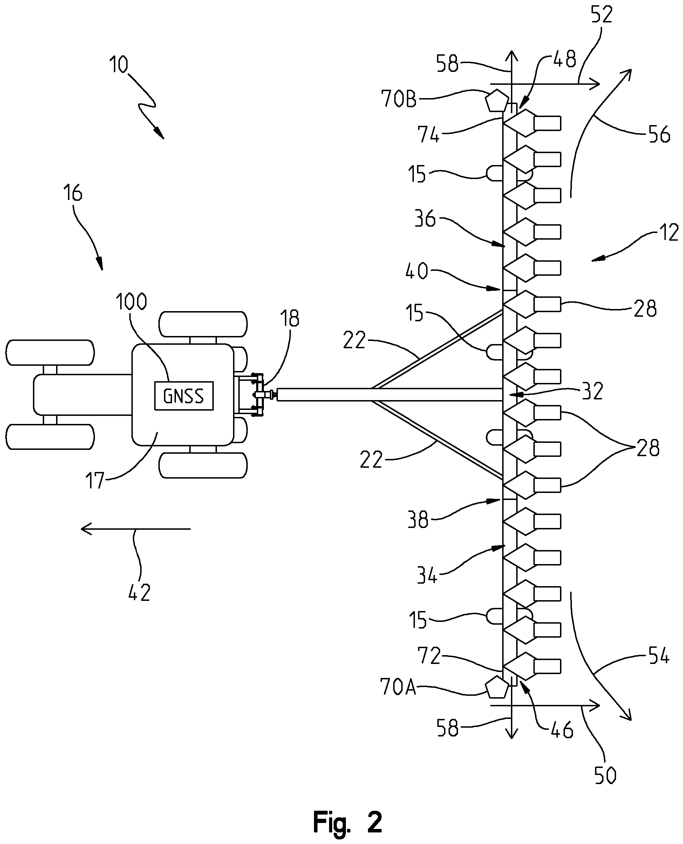

FIG. 2 is a schematic top view of the agricultural system 10 including the farm implement 12 pulled by the tractor 16 illustrating forces applied to the farm implement 12 when being pulled through a field. As the farm implement 12 is pulled through the field in a forward direction 42, each of the row units 28, represented schematically, applies a drag force to the center frame section 32, the first toolbar 34, and the second toolbar 36. While the drag forces applied by each of the row units 28 may be substantially equal, depending on soil conditions, the drag forces applied towards an end 46 of first toolbar 34 and an end 48 of second toolbar 36 tend to move end 46 and end 48 in respective directions 50 and 52. The movement in directions 50 and 52 may result from accumulated forces applied to each of the first and second toolbars 34 and 36 from drag forces applied to the soil during implement 12 movement along the field. These drag forces result from the soil engaging component of the row units 28 that engage the soil to open or close furrows. In addition, the movement in directions 50 and 52 also results from the length of each of the first toolbar 34 and the second toolbar 36.

As seen by arrows 54 and 56, the toolbars 34 and 36 tend to bend in the direction of arrows 54 and 56 resulting in a curved or bent condition as shown by the curvature of arrows 54 and 56. Arrows 54 and 56 generally show a condition of bending or curvature, but are not intended to illustrate an amount of curvature or bending experienced by each of the first toolbar 34 and the second toolbar 36.

Since each of the first and second toolbars 34 and 36 may experience bending, the row units 28 located towards the ends 46 and 48 of the toolbars 34 and 36 may no longer be aligned with a central longitudinal axis 58 defined by the toolbars when manufactured to a nominal design. One or both of the toolbars due to the bending or flexion are deflected from the longitudinal axis. Consequently, one or both of the toolbars experiences a deflection, and one or more of the row units 28 may no longer track an intended furrow, with the result being an improper placement of seeds or fertilizer. In addition, use of the implement 12 over time may result in mechanical wear to the toolbars 34 and 36 as well mechanical wear to mechanical joints, such as first rotatable coupler 38 and second rotatable coupler 40. Extended use of the implement 12 increases mechanical wear leading to misalignment of row units. The mechanical wear damages the implement 12 that requires repair or replacement.

In one implementation as illustrated, the toolbar 34 includes fourteen (14) row units 28, the toolbar 36 includes 14 row units 28, and the center frame section 32 includes eight (8) row units 28. Other implementations are also contemplated and include other numbers of row units. In some implementation, the number of row units is not the same from side toolbar to another side toolbar. In still other implementations, the number of row units is not the same for one side toolbar to another side toolbar. In some situations, the operator may remove one or more row units from one side only such that the number of row units is not the same for one toolbar to another toolbar.

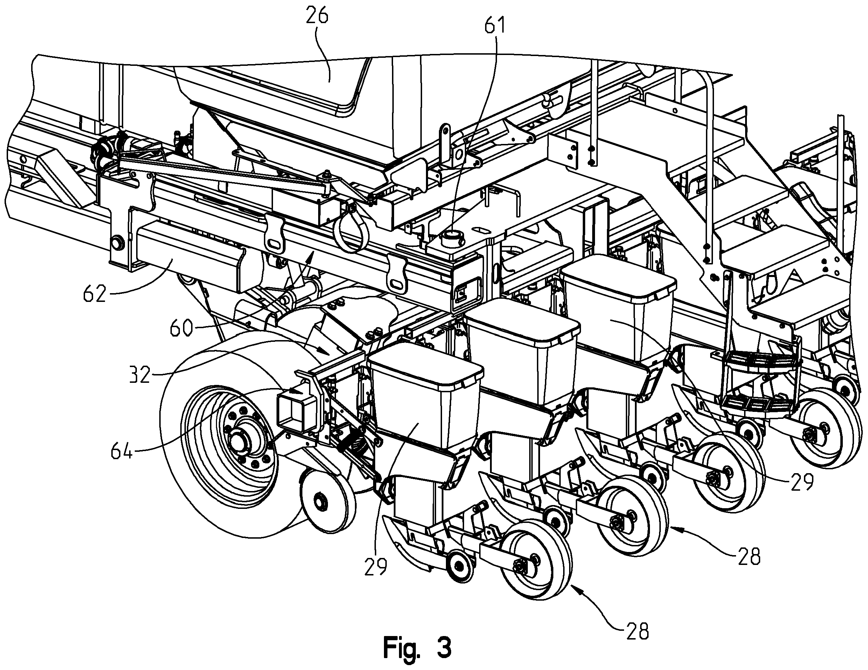

FIG. 3 is a perspective view of a movable joint 60 for coupling a movable bar 62 to a fixed bar 64 of a farm implement 12. In one implementation, the movable joint 60 corresponds to movable joint 38 of FIG. 2. Other configurations of movable joints are contemplated. The fixed bar 64 is located at the center frame section 32 which supports row units 28. The movable bar 62 corresponds to the first toolbar 34. As described above, the movable joint 60 enables folding of the first toolbar 34 in a forward position for moving the implement 12 along a road, for instance. Since this movable joint 60 experiences both rotational forces when being folded and unfolded, additional undesirable forces may be experienced when the implement is being transported along a road or field in the folded condition. Undesirable wear may therefore occur at movable joint 60. In one implementation, the movable joint includes a pin 61 about which the first toolbar 34 rotates. Toolbar 36 includes a similar configuration including a movable joint at rotatable coupler 40 and experiences undesirable wear.

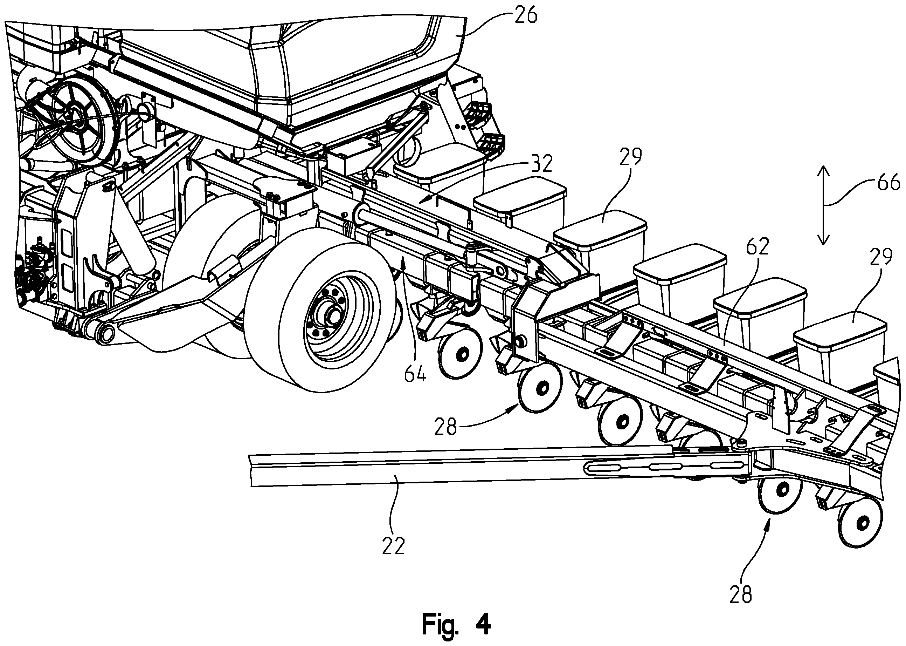

To use the implement for planting, the first toolbar 34 is moved to an aligned condition with the center frame section 32 as illustrated in FIG. 4. In this condition, the first toolbar 34 is aligned with the center frame section 32 along the axis 58 of FIG. 2. The second toolbar 36 is aligned with the center frame section 32. The movable joint 60 and the movable joint at location 40 of toolbar 36 experiences less damage from rotational movement of the joint 60 in this position, but other forces experienced at the joint(s) may occur. For instance, the first tool bar 34 and second toolbar 36 may experience forces in a vertical direction 66 or torsional forces as the implement 12 is pulled over the field, for instance in response to undulating ground.

Forces experienced by the first tool bar 34 during planting may occur in other directions as well, since the ground does not rise and fall in a predictable pattern. Not only do these forces affect the joint 60, but such forces may affect a beam strength of materials used to make the tool bar 34. For instance, in one implementation, the tool bar 34 includes square beams that may experience torsional forces as well as other straight line direction forces. Consequently, the forces experienced by the first toolbar 34 and the second toolbar 36 may result from a multitude of different directions, each of which may affect the position and alignment of the row units 28 during use.

As seed is planted, flexion or flexing of the bars causes seeds, or fertilizer, to be placed in different positions than what is determined by an original condition of the implement. Thus the tracking placement of the seed, or fertilizer, is incorrect. This flexion can be caused by slopes, varying ground compaction, levels of ground moisture, and impediments to correct placement of seed. As used herein flexion means a bending or flexing experienced by a mechanical system, apparatus, tool, implement, or device.

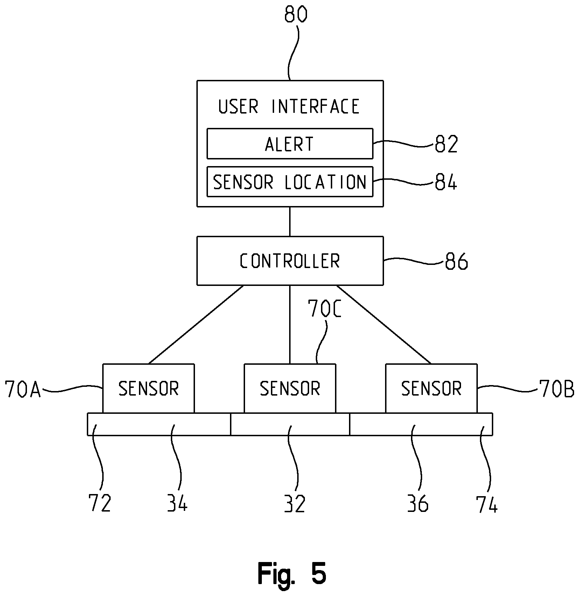

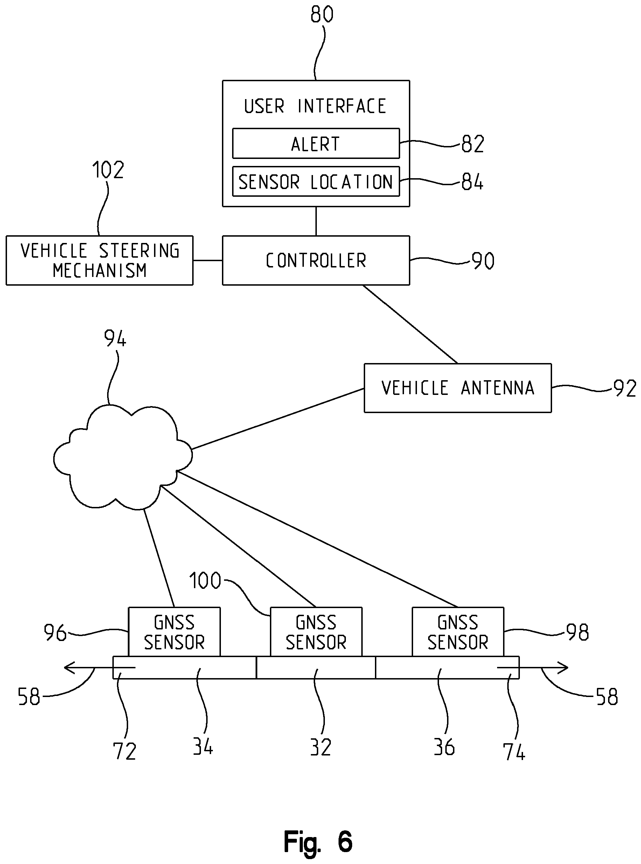

Some customers may adjust the spacing of the row units, and some customers may remove row units. When removing units, this could create an odd number of units side to side. The flexion measurement could be used to measure the 'balance' of the planter bar. When the balance is off, an alert is transmitted to a user interface such as user interface 80 of FIGS. 5 or 6. The alert notifies the operator to make an adjustment to the tool bars so that the row units travel along a straight line within the field.

Flexion of the tool bars may also result from mechanical wear or 'looseness' of the mechanical joints on the overall frame. Flexion may continue to increase over time, and wear may be indicated. When the joints are tight (or within spec), the flexion may return to a static value most of the time during operation since the forces causing flexing change and return to a more normal state. When the joints are worn, however, the flexion remains during most operations. In this case, the wear may results from flexion at the movable joints, also known as folding joint(s), at locations 38, 40, and elsewhere.

To identify flexion, one or more sensors 70 are coupled to the implement 12 as seen in FIG. 2. In FIG. 2, a sensor 70A is coupled to an end 72 of first toolbar 34 and a sensor 70B is coupled to an end 74 of second toolbar 36. In some implementations, and as illustrated in FIG. 2, the sensors 70A and 70B are located at terminating ends of the first toolbar 34 and second toolbar 36. In other implementations, the sensors 70A and 70B are not located at terminating ends of the toolbar and other locations are contemplated. For instance, sensors may be located towards ends of the toolbar so that deflection may be measured. Sensors may also be located toward a middle of that toolbar as long as deflection can be measured. In one or more implementations, different types of sensing devices or sensor may be employed. For instance, sensing devices include, but are not limited to, global navigation satellite system (GNSS) sensors, inertial measurement unit (IMU) sensors, strain gauges, and pin rotation sensors where pins are used at rotatable joints such as joint 60. One or more of each of the GNSS sensors, inertial measurement unit (IMU) sensors, strain gauges, and/or pin rotation sensors, in different implementations, may be used as stand-alone measurement sensors that are located at or across a joint. In one implementation, one sensor is located at the rotatable joint 38 between the center frame 32 and the first toolbar 34, and at the rotatable joint 36 between the center frame 32 and the second toolbar 36. As described herein, a stand-alone measurement sensor is one which provides an indication of flexion at a particular location, such as at a rotatable joint. While GNSS sensors generally review generically to satellite systems, other specific types of GNSS sensor are contemplated. For instance, Europe has Galileo as a GNSS sensor, Russia has GLONASS as a GNSS sensor, China has BeiDou as a GNSS sensor, and the US has GPS as a GNSS sensor.

In one implementation illustrated in FIG. 5, the work vehicle 16 includes a user interface 80 including an alert indicator 82 and a sensor location display 84 to identify a sensor location at which flexion is identified. In one implementation, a controller 86 is operatively connected to the user interface 80 as well as to sensors 70A, 70B, and a sensor 70C coupled to the center toolbar 32. In another implementation, the senor 70C is not included. See FIG. 1, for instance, where the user interface 80 is located in the cab 17 of the tractor 16.

Each of the sensors 70A and 70B transmits a location signal to the controller 86 indicated respectively the location of ends 72 and 74. The controller 86 executes or otherwise relies upon computer software applications, components, programs, objects, modules, or data structures, etc. Software routines, i.e. software, resident in the included memory, are executed in response to the signals received from the sensors or through CAN bus. In other implementations, the computer software applications are located in a memory internal to the controller 86 or external to the controller 86, including the "cloud". The executed software includes one or more specific applications, components, programs, objects, modules or sequences of program instructions typically referred to as "program code". The program code includes one or more program instructions located in memory and other storage devices that execute the instructions that are resident in memory, which are responsive to other program instructions or machine settings generated by the system.

Upon receipt of the location signals, the controller 86 compares the received location signals to a predetermined location value, wherein the predetermined location value identifies an original design value indicative of the original position of each of the ends 72 and 74. The controller 86 compares the original design value(s) to the received location signals to determine whether flexion is occurring. In one implementation, the controller 86 compares threshold values that are used in the comparison to determine whether an identified flexion has exceeded the threshold values. If the identified flexion, also known as an amount of deflection, has exceeded the threshold values, the alert 82 is activated to indicate to an operator that flexion has occurred. In one implementation, the threshold values are determined based on original design constraints.

In another implementation, a sensor 70C is located at the center toolbar 32. This sensor transmits a location signal of the sensor 70C to the controller 86. The value of this sensor 70C is compared to either one or both of sensor location signals 70A and 70B.

FIG. 6 illustrates another implementation of a control system to identify flexion in the implement 12. In this implementation, the user interface 80, which includes the alert 82 and sensor location 84, is operatively connected to a controller 90. The controller 90 is configured to transmit and receive signals from a vehicle antenna 92. The vehicle antenna 92 is operatively connected to a cloud system 94 that utilizes the internet. In this implementation, a first GNSS sensor 96 is coupled to the end 72 of the first toolbar 34 and a second GNSS sensor 98 is coupled to the end 74 of the second toolbar 36. Each of the first and second GNSS sensors 96 and 98 include transmitters configured to transmit location information of the ends 72 and 74 to the cloud system 94. A third GNSS sensor 100 is coupled to the center toolbar 32 and remains at a fixed position with respect to either of the first GNSS sensor 96 and the second GNSS sensor 98.

Each of the first, second, and third GNSS sensor are aligned along the longitudinal axis 58. As long as the implement 12 is stationary and the implement 112 has not experienced wear that causes flexion, location information from each of the GNSS sensors transmits the same or similar location information for being located substantially along the axis 58. Once the implement 12 is in motion while planting or fertilizing, the GNSS sensor 96 and/or the GNSS sensor 98 may transmit signals that indicate an amount of flexion. Since the central toolbar 32 does not flex, the signal transmitted by the GNSS sensor 100 indicates the location of the longitudinal axis 58. In one implementation, each of the location signals transmitted by each of the GNSS sensor 96, 98, and 100 to the cloud system 94. The location signals received at the cloud system 94 are transmitted to the vehicle antenna 92 from the cloud system 94 to the controller 90. The controller 90 compares the sensor location signal of GNSS sensor 100 to one or both of the sensor location signals of GNSS sensor 96 and GNSS sensor 98. A deviation of either sensor location signals of GNSS sensor 96 or GNSS sensor 98 to the location signal of GNSS sensor 98 indicates a flexion of one or both of the first toolbar 34 or the second toolbar 36.

In one implementation, the controller 90 compares a flexion threshold value to an identified flexion at GNSS sensor 96 and/or GNSS sensor 98 to determine if the identified flexion has exceeded the flexion threshold value. If the identified flexion has exceeded the threshold value, the alert 82 is activated to indicate to an operator that flexion has occurred.

In another implementation, the third GNSS sensor 100 may be located at the tractor 16, for instance at the cab 17, as opposed to being located at the center section 32. See FIG. 1, for instance. The location of the third GNSS sensor 100 at the tractor, or at the center toolbar 32, is identified with respect to each of the GNSS sensors, sensor 96 and the sensor 98. By knowing the location of each of the GNSS sensors 96, 98, with respect to GNSS sensor 100, the amount of flexion with respect to the fixed GNSS sensor 100 is identifiable. The identification may be used to determine deflection of ends 72 and 74 with respect to the cab location of GNSS sensor 100, by using triangulation for instance. When the GNSS sensor 100 is located at either the center toolbar 32 or at the tractor 16, the GNSS sensor 100 operates as a "home" sensor whose location remains fixed with respect to the remaining sensors 96 and 98. Deflection for the ends of the toolbar where GNSS sensors 96 and 98 with respect to "home" sensor may then be determined.

In other implementations, deflection of the toolbar 14 may be determined at each of the joints 48 and 40 using one or more of the global positioning system (GNSS) sensors, inertial measurement unit (IMU) sensors, strain gauge sensors, and pin rotation sensors, as stand-alone measurement sensors which are located at or across the joints. In one implementation, one sensor is located at the rotatable joint 38 between the center frame 32 and the first toolbar 34, and one sensor is located at the rotatable joint 36 between the center frame 32 and the second toolbar 36. In another implementation, deflection of the toolbar is determined using one sensor as a

To identify deflection of the toolbar, the tractor 16 is directed to move in a straight line forward direction. When moving in the straight line forward direction, the drag produced by the row units and other features of the toolbar is considered to be relatively constant, such that any changes in terrain as the tractor 16 moves forward are minimized. The identification of flexion, therefore, is made by reducing undesirable effects that irregular terrain conditions may produce.

When using GNSS sensors 96, 98, 100 and moving in the straight line direction, each sensor provides a GNSS vector signal, i.e. a direction signal, having the same heading or straight line direction. In one example, the straight line direction is maintained using a tractor steering angle of approximately plus or minus 3 degrees about a zero degree straight line. The straight line direction is generally parallel to the forward moving direction of the tractor 16. The straight line direction is adjusted by a vehicle steering mechanism 102 in response to one of an operator control, such a steering wheel, or autonomous control. When being controlled, the steering mechanism transmits a steering control signal to the controller 90. In different implementations, the vehicle steering mechanism includes Ackerman steering or articulated steering on the tractor. Other types of steering mechanisms are contemplated.

In one implementation, the controller 90 compares the steering control signal to a threshold value, such as the plus or minus the 3 degrees value. As the tractor 16 moves forward, the directional vectors each have headings of the same direction, if there is no toolbar deflection. Based on the resulting comparison made to identify steering direction, a value of the comparison is displayed on the user interface 80 to provide a real time comparison to the operator. As the operator views the real time comparison, the operator may adjust the tractor's steering to maintain the straight line direction within the straight line threshold values. As the tractor moves forward along the straight line, the controller 90 generates values of flexion experienced by the first toolbar 34 or the second toolbar 36. If the values of flexion are greater that the flexion threshold value, the controller 90 may generate an indicator shown on the user interface 80 to indicate the occurrence of excess flexion. Once indicated, the operator may note the excess flexion using a store button located at the user interface 80. In other implementations, the real time comparison is not shown and the controller 90 only generates a flexion alert at the user interface to indicate that excess flexion has occurred. In some implementations, the flexion alert includes an audible alert. In other implementations, the directional vector signals are transmitted to the cloud system where comparisons to determine flexion are determined.

In a further implementation, if the toolbar is traveling in an arc, flexion may also be determined. For instance, if the system of FIG. 1 the system is traveling straight, forces acting on toolbars 34 and 36 will be relatively equal (ignoring soil and row unit variation). If the system is turning to the left, however, toolbar 36 starts traveling faster than toolbar 34, and toolbar 36 may experience more flexion as a result and this flexion may be more identifiable knowing the direction of turning. If the 3rd sensor is on the tractor, the pivot point at the hitch may make this more difficult, but flexion may be able to be determined.

The identified flexion may be used as a way to understand mechanical wear, "looseness" of the mechanical joints on the overall frame, or wear to the toolbars. As flexion increases over time, the amount of flexion may indicate that wear to the mechanical joints or toolbars is or has occurred. When the mechanical joints are tight or within specifications, such as when new or when replaced, the flexion values will return to a static value most of the time during operation. However, when the joints or other mechanical systems or apparatus are worn, the wear, and therefore the flexion, will remain during most operations. In one or more implementations, the wear would likely be present at the folding joint(s).

Flexion identification may also be used to identify an issue with a tire/wheel/hub assembly on one of the outside wheels, wheels located towards end 72 and 74. A wheel not turning properly may produce increased drag on the side of the implement, which could be measured by identifying flexion.

In one or more implementations, the controller 90 continuously receives signal data from the sensors that identify the amount of flexion. This signal data may be stored in a memory associated with the controller 90. The stored data is compared with the threshold over a period of time to determine a change in flexion over time. The change in flexion over time h be used to identify trends related to mechanical wear. For instance, if a change in flexion occurs relatively rapidly over time, such a change may represent a breakage, which may require repair or replacement of parts or other components of the mechanical systems. More gradual changes to flexion may indicate wear resulting from use. Changes over time may be displayed at the user interface 80 to alert the user or a break or of wear. A change in the amount of flexion over time may be used as an indicator that the mechanical system needs maintenance.

In another implementation, the cloud system 94 is configured to compare each of the location signals transmitted by each of the GNSS sensors 96, 98, to the location signal of GNSS sensor 100 to identify flexion. If the comparison identifies flexion, this flexion is transmitted to the vehicle antenna 92 that is then received by the controller 90. Once received, the controller 90 causes the alert 82 to indicate flexion when it occurs.

In further implementations, the agricultural implement includes a controller located on the implement that identifies the flexion of the implement. In this way, the agricultural implement having this feature may be used with a variety of different work vehicles. In one exemplary implementation, the agricultural implement includes a transmission device to transmit flexion information either to the cloud or to the work vehicle. In another implementation, the sensors transmit flexion information to the cloud and a controller located on the cloud determines flexion. The result of the flexion measurement at the cloud is then transmitted to an operator located at the work vehicle. If the system 10 is an autonomous system, the result of the flexion measurement is transmitted to operators or users not located at the work vehicle 16.

While exemplary implementations incorporating the principles of the present disclosure have been described hereinabove, the present disclosure is not limited to the described implementations. Instead, this application is intended to cover any variations, uses, or adaptations of the disclosure using its general principles. Further, this application is intended to cover such departures from the present disclosure as come within known or customary practice in the art to which this disclosure pertains and which fall within the limits of the appended claims.

## Claims

1. A work implement (12) for fertilizing or planting seed in a field, the work implement (12) comprising:
a toolbar (14) including a first end (46) and a second end (48), the toolbar (14) including a plurality of row units (28) spaced along the toolbar (14) and between the first end (46) and the second end (48);
a first sensor (70A) operatively connected to the first end (46);
a second sensor (70B) operatively connected to the second end (48);
wherein the toolbar (14) defines a longitudinal axis (58), and the first sensor (70A) identifies a first deflection of the first end (46) with respect to the longitudinal axis (58) and the second sensor (70B) identifies a second deflection of the second end (48) with respect to the longitudinal axis (58); and
a user interface (80) operatively connected to the first sensor (70A) and the second sensor (70B), wherein the user interface (80) identifies one or both of the first deflection and the second deflection.

2. The work implement (12) of claim 1, further comprising a center toolbar (32), wherein the toolbar (14) includes a first toolbar (34) coupled to the center toolbar (32) and having the first end and a first plurality of row units, and a second toolbar (36) coupled to the center toolbar (32) and having the second end and a second plurality of row units, the second toolbar (36) operatively connected to the first toolbar (34) through the center toolbar (32); and
wherein the first sensor (70A) identifies the first deflection of the first toolbar (34) and the second sensor (70B) identifies the second deflection of the second toolbar (36).

3. The work implement (12) of claim 2 further comprising a first movable joint (38) located at a first jointed end of the first toolbar (34) with the center toolbar (32) and a second movable joint (40) located at a second jointed end of the second toolbar (36) with the center toolbar (32), wherein the first sensor (70A) is located at the first jointed end and the second sensor (70B) is located at the second jointed end.

4. The work implement (12) of claim 3 wherein the first sensor (70A) is located at the first jointed end and the second sensor (70B) is located at the second jointed end, wherein the first sensor (70A) and the second sensor (70B) includes one of an inertial measurement unit (IMU) sensor, a strain gauge, a pin rotation sensor, or a GNSS sensor.

5. The work implement (12) of claim 3 further comprising a third sensor (100), wherein the first sensor (70A), the second sensor (70B), and the third sensor (100) includes a GNSS sensor.

6. The work implement (12) of claim 5 further comprising a center frame section including the center toolbar (32) having a third plurality of row units (28), wherein the center toolbar (32) is operatively connected to the first movable joint and to the second movable joint, wherein the first sensor (70A) is located at the first toolbar (34), the second sensor (70B) is located at the second toolbar (36), and the third sensor (100) is located at a fixed position with respect to the center toolbar (32).

7. The work implement (12) of claim 6 wherein the third sensor (100) is fixed with respect to the center frame section and with respect to the longitudinal axis (58) and the first sensor (70A) moves from the longitudinal axis (58) with the first deflection of the first toolbar (32) and the second sensor (70B) moves from the longitudinal axis (58) with the second deflection of the second toolbar (36).

8. The work implement (12) of claim 7 further comprising a controller (86) operatively connected to the first sensor (70A), the second sensor (70B), and the third sensor (100), wherein the controller (86) compares a first location signal, provided by the first sensor (70A), with a third location signal, provided by the third sensor (100), to identify the first deflection, and compares a second location signal, provided by the second sensor (70B), with the third location signal to identify the second deflection of the second toolbar (36).

9. The work implement (12) of claim 8 wherein each of the first GNSS sensor, the second GNSS sensor, and the third GNSS sensor respectively transmit the first location signal, the second location signal, and the third location signal to a cloud system (94) operatively connected to the controller (86).

10. An agricultural system (10) for fertilizing or planting seed in a field, the agricultural system comprising:
a power mover including a propulsion system;
a work implement (12) operatively connected to the power mover, wherein the propulsion system moves the work implement (12) through the field in a forward direction to fertilize or plant the seed in the field, wherein the work implement (12) includes a toolbar (14) defining a longitudinal axis (58) and having a plurality of row units (28), the toolbar (14) including a first sensor (70A) operatively connected to a first end (46) of the toolbar (14) and a second sensor (70B)operatively connected to a second end (48) of the toolbar (14), wherein the first sensor (70A) identifies a first deflection of the first terminating end (46) with respect to the longitudinal axis (58) and the second sensor (70B) identifies a second deflection of the second terminating end (70B) with respect to the longitudinal axis (58); and
a user interface (80) operatively connected to the first sensor (70A) and the second sensor (70B), wherein the user interface (80) identifies one or both of the first deflection and the second deflection.

11. The agricultural system (10) of claim 10 wherein the toolbar (14) includes a first toolbar (34) having the first end, first toolbar (14) including a first rotatable coupling configured to enable the first toolbar (34) to fold with respect to the power mover and a second toolbar (36) having the second end, the second toolbar (36) including a second rotatable coupling configured to enable the second toolbar (36) to fold with respect to the power mover,
wherein the user interface (80) identifies a first location of the first sensor (70A) and a second location of the second sensor (70B).

12. The agricultural system (10) of claim 11 wherein the first sensor (70A) or the second sensor (70B) includes one of an inertial measurement unit (IMU) sensor, a strain gauge, or a pin rotation sensor.

13. The agricultural system (10) of claim 11 wherein the first sensor (70A) and the second sensor (70B) includes a GNSS sensor.

14. The agricultural system (10) of claim 11 wherein the work implement (12) includes a center frame section including a center toolbar (32) having a third plurality of row units (28), wherein the center toolbar (32) is operatively connected to the first rotatable coupling and to the second rotatable coupling and a third sensor (100) is located at a fixed position with respect to the center toolbar (32).

15. A method of identifying a deflection of a toolbar (14) of a work implement (12) having a plurality of row units (28), the method comprising:
identifying a longitudinal axis (58) of the toolbar (14);
comparing a first location of a first end (46) of the toolbar (14) with respect to the longitudinal axis (58) to identify an amount of a first deflection of the first end (46);
comparing a second location of a second end (48) of the toolbar (14) with respect to the longitudinal axis (58) to identify an amount of a second deflection of the second end (48); and
displaying one or both of the amount of the first deflection of the amount of the second deflection on a user interface (80).

## Amended claims

### Amended claims in accordance with Rule 137(2) EPC.

1. A work implement (12) for fertilizing or planting seed in a field, the work implement (12) comprising:
a toolbar (14) including a first end (46) and a second end (48), the toolbar (14) including a plurality of row units (28) spaced along the toolbar (14) and between the first end (46) and the second end (48);
a first sensor (70A) operatively connected to the first end (46);
a second sensor (70B) operatively connected to the second end (48);
wherein the toolbar (14) defines a longitudinal axis (58), and the first sensor (70A) identifies a first deflection of the first end (46) with respect to the longitudinal axis (58) and the second sensor (70B) identifies a second deflection of the second end (48) with respect to the longitudinal axis (58); and
a user interface (80) operatively connected to the first sensor (70A) and the second sensor (70B), wherein the user interface (80) identifies one or both of the first deflection and the second deflection;
a center toolbar (32), wherein the toolbar (14) includes a first toolbar (34) coupled to the center toolbar (32) and having the first end and a first plurality of row units, and a second toolbar (36) coupled to the center toolbar (32) and having the second end and a second plurality of row units, the second toolbar (36) operatively connected to the first toolbar (34) through the center toolbar (32); wherein the first sensor (70A) identifies the first deflection of the first toolbar (34) and the second sensor (70B) identifies the second deflection of the second toolbar (36);
a first movable joint (38) located at a first jointed end of the first toolbar (34) with the center toolbar (32) and a second movable joint (40) located at a second jointed end of the second toolbar (36) with the center toolbar (32), wherein the first sensor (70A) is located at the first jointed end and the second sensor (70B) is located at the second jointed end;
a third sensor (100), wherein the first sensor (70A), the second sensor (70B), and the third sensor (100) each include a GNSS sensor;
a center frame section including the center toolbar (32) having a third plurality of row units (28), wherein the center toolbar (32) is operatively connected to the first movable joint and to the second movable joint, wherein the first sensor (70A) is located at the first toolbar (34), the second sensor (70B) is located at the second toolbar (36), and the third sensor (100) is located at a fixed position with respect to the center toolbar (32), wherein the third sensor (100) is fixed with respect to the center frame section and with respect to the longitudinal axis (58) and the first sensor (70A) moves from the longitudinal axis (58) with the first deflection of the first toolbar (32) and the second sensor (70B) moves from the longitudinal axis (58) with the second deflection of the second toolbar (36);
a controller (86) operatively connected to the first sensor (70A), the second sensor (70B), and the third sensor (100), wherein the controller (86) compares a first location signal, provided by the first sensor (70A), with a third location signal, provided by the third sensor (100), to identify the first deflection, and compares a second location signal, provided by the second sensor (70B), with the third location signal to identify the second deflection of the second toolbar (36).

2. The work implement (12) of claim 1 wherein each of the first GNSS sensor, the second GNSS sensor, and the third GNSS sensor respectively transmit the first location signal, the second location signal, and the third location signal to a cloud system (94) operatively connected to the controller (86).

3. The work implement of claim 1 or 2, wherein the controller (86) is configured to display one or both of the amount of the first deflection or the amount of the second deflection on the user interface (80).

4. An agricultural system (10) for fertilizing or planting seed in a field, the agricultural system comprising a power mover including a propulsion system and a work implement (12) according to one of the preceding claims operatively connected to the power mover, wherein the propulsion system moves the work implement (12) through the field in a forward direction to fertilize or plant the seed in the field.
